# EUROPÄISCHE PATENTSCHRIFT

(11) **EP 1 753 567 B1**
(45) Veröffentlichungstag und Bekanntmachung des Hinweises auf die Patenterteilung: **02.12.2009**
(21) Anmeldenummer: 05740721.5
(22) Anmeldetag: 24.03.2005
(51) Int. Cl.: B23B 5/00

(54) **VORRICHTUNG ZUR BEARBEITUNG VON BAUTEILEN**
DEVICE FOR MACHINING STRUCTURAL COMPONENTS
DISPOSITIF D'USINAGE DE COMPOSANTS

(30) Priorität: 29.03.2004 DE 102004015300
(43) Veröffentlichungstag der Anmeldung: 21.02.2007
(73) Patentinhaber: MTU Aero Engines GmbH, 80995 München (DE)
(72) Erfinder: KLINGELS, Hermann, 85221 Dachau (DE)
(86) Internationale Anmeldenummer: PCT/DE2005/000544
(87) Internationale Veröffentlichungsnummer: WO 2005/095032

(56) Entgegenhaltungen:
- GB-A- 2 240 735
- US-A- 3 744 357
- US-A- 4 624 158

## Beschreibung

Die Erfindung betrifft eine Vorrichtung zur Drehbearbeitung von Rotoren an radial nach Innen weisenden Bearbeitungsflächen, nach dem Oberbegriff des Patentanspruchs 1.

Aus der GB-A-2 240 735 ist eine Vorrichtung zur Drehbearbeitung von Statoren von Gasturbinentriebwerken bekannt, welche speziell für die Bearbeitung eines Einlaufbelages am Fangehäuse vorgesehen ist. Die Vorrichtung ist als fahrbare Bearbeitungsstation ausgeführt und weist einen elektromotorisch antreibbaren, mit der Niederdruckwelle des Triebwerks koppelbaren, sich radial erstreckenden Arm (26) auf, an dessen radial äußerem Ende das Drehwerkzeug sitzt. Das Drehwerkzeug/Schneidwerkzeug ist relativ zu dem Arm (26) auf schlittenartigen Trägern (48, 60) axial und radial verfahrbar bzw. verstellbar angeordnet. Während der axialen Vorschubbewegung wird die radiale Position bevorzugt über eine Kulissenkurve (88) gesteuert, so dass sich "automatisch" die richtige Einlaufbelagkontur ergibt, welche im wesentlichen kreiszylindrisch - mit geringen Durchmesseränderungen - verläuft. Der Vorteil dieser Vorrichtung ist darin zu sehen, dass große, sensible Baueinheiten, wie Triebwerke, in ihrer bestimmungsgemäßen Einbaulage unter Berücksichtigung der in dieser Lage auftretenden Belastungen und Verformungen bearbeitet werden können, wodurch eine bessere Maßhaltigkeit im Betrieb erzielt werden kann. Die Ankoppelung und Inbetriebnahme der Vorrichtung erfordert relativ große, axial einseitig offene Innenquerschnitte, wie z.B. ein nach vorne offenes Fangehäuse, ohne Hinterschnitte bzw. andere Einengungen. Zur Innenbearbeitung von aus mehreren Scheiben zusammengesetzten Rotoren mit tiefen Hinterschnitten bzw. Kammern ist die Vorrichtung nicht geeignet.

Rotoren von Gasturbinen, insbesondere Rotoren von Hochdruckverdichtern von Flugtriebwerken, werden üblicherweise von mehreren axial hintereinander angeordneten Rotorscheiben gebildet, wobei die Rotorscheiben entweder miteinander verschraubt oder miteinander verschweißt sind. Beim Verschweißen der Rotorscheiben bilden sich an radial innenliegenden Flächen sowie an radial außenliegenden Flächen Schweißnähte aus, die zur Vermeidung von Kerbstellen nachbearbeitet werden müssen. Da die radial innenliegenden Flächen der Rotoren schwer zugänglich sind, ist die Bearbeitung der Schweißnähte an den radial innenliegenden Flächen problematischer als die Bearbeitung der Schweißnähte an den radial außenliegenden Flächen.

Im Zuge der Optimierung von Gasturbinen, insbesondere der Optimierung von Flugtriebwerken, werden immer höhere Drehzahlen der Rotoren erforderlich. Damit steigt auch die von den Rotoren abzufangende Belastung. Je höher die Belastung der Rotoren ausfällt, desto kleiner werden in der Regel Nabenbohrungen innerhalb der Rotoren. Daraus folgt, dass eine radiale Tiefe von zwischen miteinander verbundenen Rotorscheiben angeordneten Kammern zunimmt. Ist zum Beispiel die radiale Tiefe der zwischen den miteinander verbundenen Rotorscheiben angeordneten Kammern größer als der Durchmesser der Nabenbohrung, so sind spezielle Vorrichtungen bzw. Werkzeuge zur Bearbeitung, nämlich zur Drehbearbeitung, der radial innenliegenden Bearbeitungsflächen, die zwischen den miteinander verbundenen Rotorscheiben verlaufen, erforderlich.

Aus dem Stand der Technik sind bereits Vorrichtungen bzw. Werkzeuge zur Drehbearbeitung von Rotoren an radial innenliegenden Bearbeitungsflächen bekannt, die den oben skizzierten Schwierigkeiten Rechnung tragen. Die aus dem Stand der Technik bekannten Vorrichtungen bzw. Werkzeuge zur Drehbearbeitung sind jedoch insbesondere dann nicht mehr geeignet, wenn zusätzlich zur immer größer werdenden, radialen Tiefe der zwischen miteinander verbundenen Rotorscheiben verlaufenden Kammern auch die Breite der Rotorscheiben im Nabenbereich zunimmt, wenn also der axiale Abstand zwischen zwei Rotorscheiben im Nabenbereich verringert wird. In diesem Fall ist es nicht möglich, die aus dem Stand der Technik bekannten Vorrichtungen bzw. Werkzeuge zur Drehbearbeitung in den zu bearbeitenden Rotoren einzuführen bzw. eine Drehbearbeitung an den radial innenliegenden Bearbeitungsflächen des Rotors vorzunehmen.

Hiervon ausgehend liegt der vorliegenden Erfindung das Problem zu Grunde, eine neuartige Vorrichtung zur Innenbearbeitung von Rotoren zu schaffen.

Dieses Problem wird dadurch gelöst, dass die eingangs genannte Vorrichtung durch die Merkmale des kennzeichnenden Teils des Patentanspruchs 1 weitergebildet ist. Erfindungsgemäß weist die Bohrstange einen sich im wesentlichen in radialer Richtung erstreckenden Vorsprung auf, der mit dem sich im wesentlichen in radialer Richtung erstreckenden Werkzeugträger zusammenkoppelbar ist, wobei die radialen Abmessungen des Vorsprungs der Bohrstange und des Werkzeugträgers an die Abmessungen einer Nabenbohrung des zu bearbeitenden Bauteils derart angepasst sind, dass die Bohrstange und der Werkzeugträger in entkoppeltem Zustand in die Nabenbohrung einführbar sind, und dass in zusammengekoppeltem Zustand das im Werkzeugträger gelagerte Drehwerkzeug an die radial innenliegende Bearbeitungsfläche des Bauteils zur Anlage bringbar ist. Das Drehwerkzeug ist zusammen mit seinem Halter in vorwiegend axialer Richtung schwenkbar, wofür eine Antriebswelle in der Bohrstange und ein Getriebe im Vorsprung der Bohrstange sowie im Werkzeugträger installiert sind.

Mit der hier vorliegenden Erfindung wird eine Vorrichtung zur Drehbearbeitung von Rotoren an radial innenliegenden Bearbeitungsflächen der Rotoren vorgeschlagen, die auch dann eine zuverlässige und sichere Bearbeitung der radial innenliegenden Bearbeitungsflächen der Rotoren ermöglicht, wenn einerseits ein Durchmesser von Nabenbohrungen in den zu bearbeitenden Rotoren kleiner und damit die radiale Erstreckung von Kammern, die innerhalb der zu bearbeitenden Rotoren zwischen zwei Rotorschieben verlaufen, größer wird, und wenn andererseits der axiale Abstand insbesondere im Nabenbereich zwischen benachbarten Rotorscheiben, welche die sich im Wesentlichen in radialer Richtung erstreckenden Kammern begrenzen, kleiner wird.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine schematisierte Darstellung einer erfindungsgemäßen Vor- richtung zur Drehbearbeitung von Rotoren an radial nach Innen weisenden Bearbeitungsflächen in Draufsicht sowie Seitenan- sicht;
- Fig. 2: die erfindungsgemäßen Vorrichtung gemäß Fig. 1 in perspektivi- scher Ansicht;
- Fig. 3: ein Detail der erfindungsgemäßen Vorrichtung gemäß Fig. 1;
- Fig. 4: ein weiteres Detail der erfindungsgemäßen Vorrichtung gemäß Fig. 1;
- Fig. 5: ein weiteres Detail der erfindungsgemäßen Vorrichtung gemäß Fig. 1; und
- Fig. 6: eine schematisierte Darstellung einer Vorrichtung nach dem Stand der Technik zur Drehbearbeitung von rotationssymmetri- schen Bauteilen an radial innenliegenden Bearbeitungsflächen der Bauteile im Schnitt.

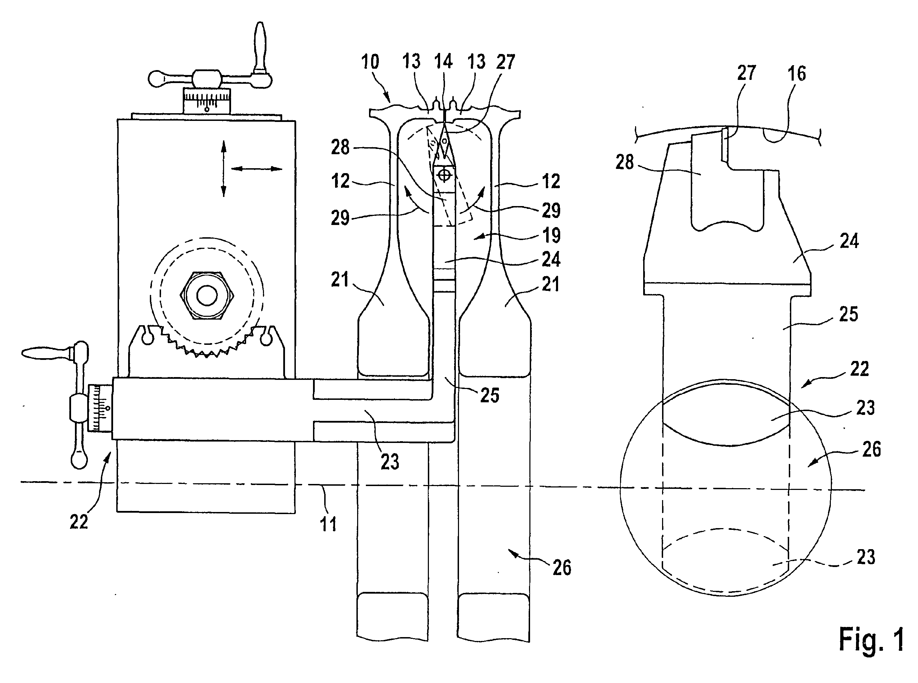

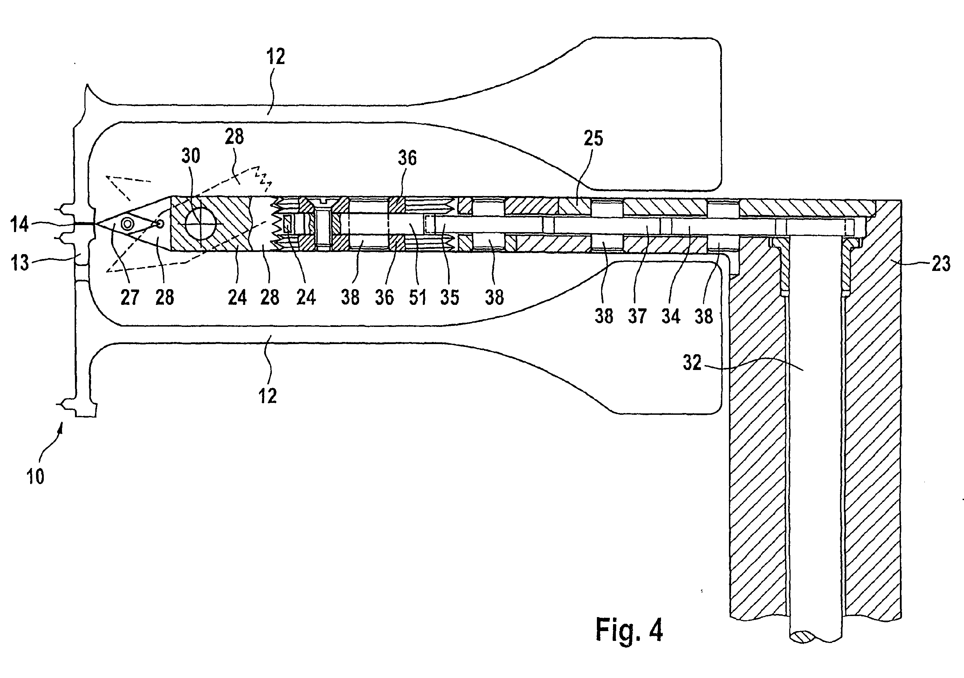

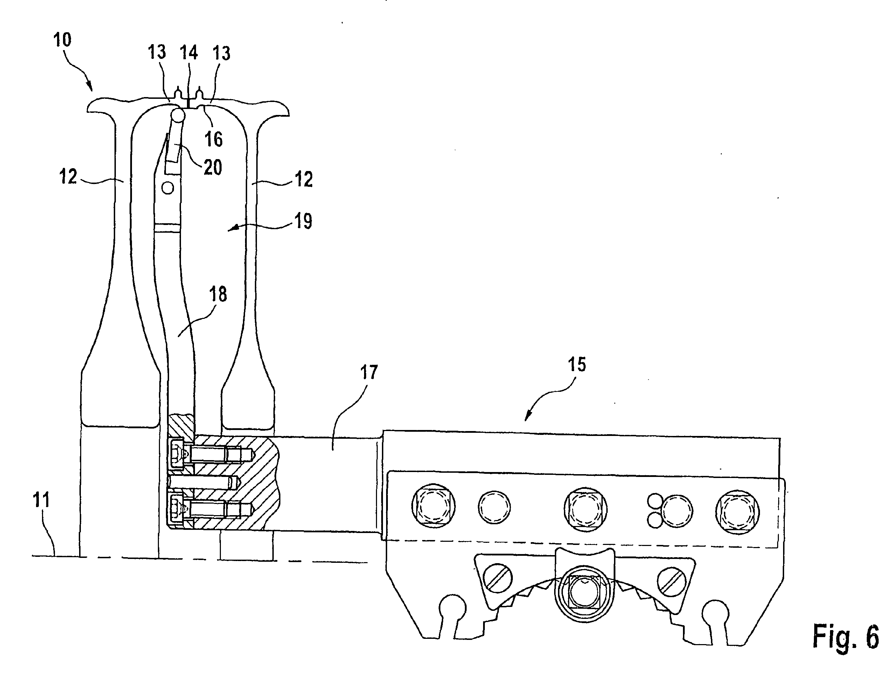

Nachfolgend wird die hier vorliegende Erfindung unter Bezugnahme auf Fig. 1 bis 5 in größerem Detail beschrieben. Zuvor soll jedoch unter Bezugnahme auf Fig. 6 eine aus dem Stand der Technik bekannte Vorrichtung zur Drehbearbeitung von rotationssymmetrischen Bauteilen an radial innenliegenden Bearbeitungsflächen derselben beschrieben werden.

Fig. 6 zeigt einen Querschnitt durch einen Rotor 10 zum Beispiel eines Hochdruckverdichters eines Flugtriebwerks. Mit der Bezugziffer 11 ist eine axiale Symmetrieachse des Rotors 10 gekennzeichnet. Der Rotor 10 der Fig. 6 wird von mehreren axial hintereinander angeordneten Rotorscheiben 12 gebildet, wobei in Fig. 6 lediglich zwei derartige Rotorscheiben 12 dargestellt sind. Die Rotorscheiben 12 erstrecken sich im Wesentlichen in radialer Richtung, wobei zwei benachbarte Rotorscheiben 12 an radial außenliegenden Enden über sich in axialer Richtung erstreckende Fortsätze 13 miteinander verbunden sind. Im Beispiel der Fig. 6 sind die Rotorscheiben 12 an den Fortsätzen 13 über eine Schweißnaht 14 miteinander verbunden. Zur Vermeidung von festigkeitsvermindernden Kerbstellen müssen die zum Rotor 10 miteinander verschweißten Rotorscheiben 12 im Bereich der Schweißnähte 14 nachbearbeitet werden. Zur Bearbeitung der Schweißnähte 14 an den radial innenliegenden Bearbeitungsflächen 16 des Rotors 10 dient die in Fig. 6 gezeigte Vorrichtung 15 zur Drehbearbeitung.

Die Vorrichtung 15 nach dem Stand der Technik verfügt über eine sich im Wesentlichen in axialer Richtung erstreckende Bohrstange 17 und einen sich im Wesentlichen in radialer Richtung erstreckenden Werkzeugträger 18. Wie Fig. 6 entnommen werden kann, ist die Bohrstange 17 der Vorrichtung 15 in die Nabenbohrung des Rotors 10 eingeführt, der Werkzeugträger 18 hingegen erstreckt sich im Bereich einer zwischen zwei miteinander verbundenen Rotorscheiben 12 ausgebildeten Kammer 19. Ein im Werkzeugträger 18 gehaltenes Drehwerkzeug 20 kommt an der radial innenliegenden Bearbeitungsfläche 16 im Bereich der Fortsätze 13 zur Anlage und dient letztendlich der Nachbearbeitung der Schweißnaht 14 an der radial innenliegenden Bearbeitungsfläche 16. Hierzu wird der Rotor 10 drehend bewegt und der Werkzeugträger 18 sowie das Drehwerkzeug 20 werden über die Bohrstange 17 mit einem axialen Vorschub beaufschlagt.

Die in Fig. 6 gezeigte, aus dem Stand der bekannte Vorrichtung 15 zur Drehbearbeitung des Rotors 10 an den radial innenliegenden Bearbeitungsflächen 16 ist dann zur Nachbearbeitung der Schweißnaht 14 im Bereich der radial innenliegenden Bearbeitungsflächen 16 nicht mehr geeignet, wenn, wie in Fig. 1 dargestellt, ein Nabenbereich 21 der Rotorscheiben 12 des Rotors 10 zunehmend dicker wird und demnach der axiale Abstand zwischen zwei miteinander zu verbindenden Rotorscheiben 12 im Nabenbereich 21 abnimmt. In diesem Fall ist einerseits die in Fig. 6 gezeigte, aus dem Stand der Technik bekannte Vorrichtung 15, nämlich der Werkzeugträger 18 derselben, nicht mehr in die Kammer 19 zwischen zwei miteinander verbundenen Rotorscheiben 12 einführbar, andererseits kann aufgrund des verringerten axialen Abstands im Nabenbereich 21 zwischen zwei miteinander verbundenen Rotorscheiben 12 die Vorrichtung 15 nach dem Stand der Technik keinen ausreichenden axialen Vorschub zur Drehbearbeitung bereitstellen.

Nachfolgend wird unter Bezugnahme auf Fig. 1 bis 5 eine erfindungsgemäße Vorrichtung 22 zur Drehbearbeitung beschrieben, die auch dann eine Drehbearbeitung von rotationssymmetrischen Bauteilen, insbesondere von Rotoren 10, ermöglicht, wenn die in Fig. 1 gezeigten und bereits beschriebenen geometrischen Verhältnisse des zu bearbeitenden Rotors vorliegen.

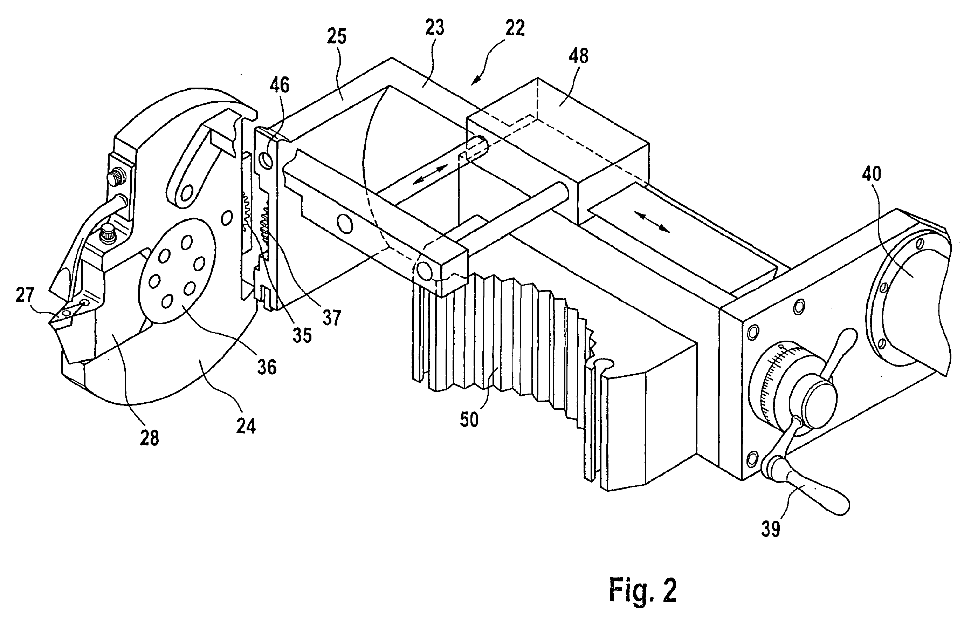

Die erfindungsgemäße Vorrichtung 22 zur Drehbearbeitung von rotationssymmetrischen Bauteilen an radial innenliegenden Bearbeitungsflächen der Bauteile verfügt über eine sich im Wesentlichen in axialer Richtung erstreckende Bohrstange 23 und einen sich im Wesentlichen in radialer Richtung erstreckenden Werkzeugträger 24. Die sich im Wesentlichen in axialer Richtung erstreckende Bohrstange 23 weist einen sich im Wesentlichen in radialer Richtung erstreckenden Vorsprung 25 auf. Der Werkzeugträger 24 ist am Vorsprung 25 der Bohrstange 23 befestigbar. Fig. 1 zeigt einen Zustand der erfindungsgemäßen Vorrichtung 22, in welcher der Werkzeugträger 24 am Vorsprung 25 der Bohrstange 23 befestigt ist. Fig. 2 zeigt hingegen eine Darstellung, in welcher der Werkzeugträger 24 vom Vorsprung 25 der Bohrstange 23 entkoppelt ist.

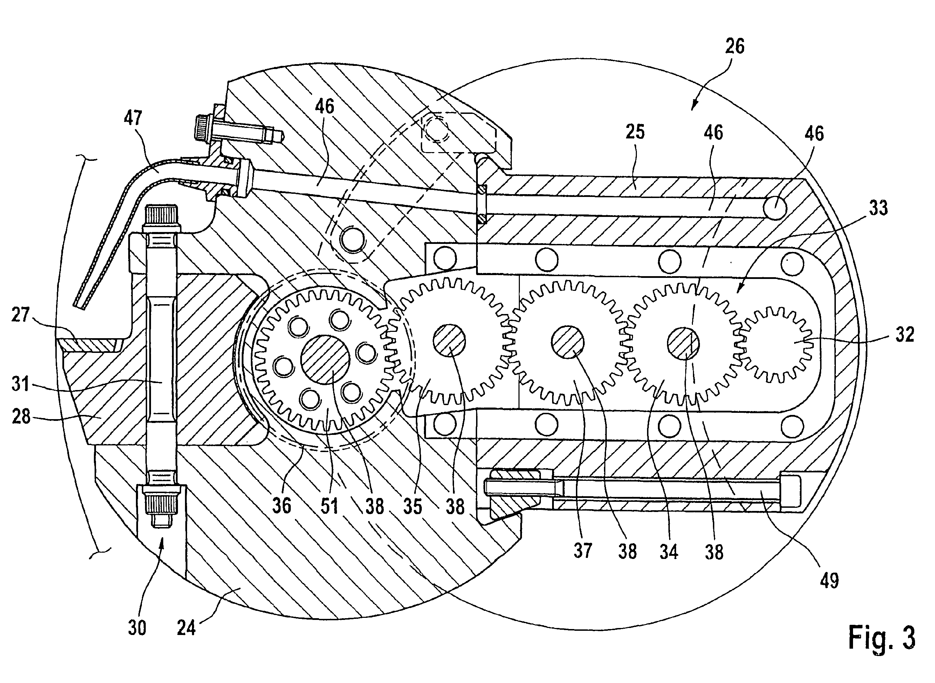

Die radialen Abmessungen des Vorsprungs 25 bzw. der Bohrstange 23 sowie die radialen Abmessungen des Werkzeugträgers 24 sind an die Abmessungen einer Nabenbohrung 26 des zu bearbeitenden Rotors 10 derart angepasst, dass die Bohrstange 23 und der Werkzeugträger 24 in entkoppeltem bzw. demontiertem Zustand in den Nabenbohrung 26 einführbar sind. Ein Außendurchmesser des Werkzeugträgers 24 sowie der Bohrstange 23, insbesondere des Vorsprungs 25 derselben, sind dabei vorzugsweise kleiner als ein Innendurchmesser der Nabenbohrung 26. Der Werkzeugträger 24 sowie die Bohrstange 23 können demnach in axialer Richtung in die Nabenbohrung 26 des zu bearbeitenden Rotors 10 eingeschoben werden, ohne dass die Außenkanten des Werkzeugträgers 24 sowie der Bohrstange 23 mit den Innenkanten des zu bearbeitenden Rotors 10 kollidieren. Wie insbesondere Fig. 3 entnommen werden kann, ist das Drehwerkzeug 27 gegenüber einer Hüllkurve des Werkzeugträgers 24 radial zurückversetzt. Hierdurch können Beschädigungen des Rotors, insbesondere der Rotorscheiben 12, beim Einschieben der erfindungsgemäßen Vorrichtung 15 in die Nabenbohrung 26 des Rotors 10 sicher vermieden werden. In zusammengebautem bzw. zusammengekoppeltem Zustand von Werkzeugträger 24 sowie Vorsprung 25 der Bohrstange 23 ist ein im Werkzeugträger 24 gelagertes Drehwerkzeug 27 an die radial innenliegende Bearbeitungsfläche 16 des Rotors 10 zur Anlage bringbar (siehe Fig.1).

Wie insbesondere Fig. 2 und 3 entnommen werden kann, ist das Drehwerkzeug 27, welches vorzugsweise als Drehmeißel ausgebildet ist, im Werkzeugträger 24 über einen Drehwerkzeughalter 28 gelagert. Der Drehwerkzeughalter 28 ist gegenüber dem Werkzeugträger 24 schwenkbar. Die Schwenkbarkeit des Drehwerkzeughalters 28 gegenüber dem Werkzeugträger 24 ist in Fig. 1 durch Pfeile 29 verdeutlicht. Das Drehwerkzeug 27 ist zusammen mit dem Drehwerkzeughalter 28 gegenüber dem Werkzeugträger 24 schwenkbar, und zwar im Sinne von Fig. 1 mit vorwiegend axialer Komponente. Wie am besten Fig. 3 entnommen werden kann, ist der Drehwerkzeughalter 28 hierzu am Werkzeugträger 24 über ein Drehgelenk 30 gelagert. Das Drehgelenk 30 wird von einer Bohrung innerhalb des Drehwerkzeughalters 28 und Werkzeugträgers 24 gebildet, in welche ein Bolzen bzw. ein Drehgelenkstift 31 hineinragt.

Die Schwenkbewegung des Drehwerkzeughalters 28 gegenüber dem Werkzeugträger 24 wird über eine in der Bohrstange 23 geführte Antriebswelle 32 bereitgestellt, wobei die Antriebswelle 32 mit dem Drehwerkzeughalter 28 über ein Getriebe 33 gekoppelt ist. Das Getriebe 33 setzt die Antriebsbewegung, nämlich die Drehbewegung, der Antriebswelle 32 in eine Schwenkbewegung des Drehwerkzeughalters 28 um.

Das Getriebe 33 wird im gezeigten Ausführungsbeispiel von mehreren im Vorsprung 25 der Bohrstange 23 angeordneten Zahnrädern gebildet. Ein erstes Zahnrad 34 steht mit der Antriebswelle 32 in Wirkungseingriff, ein zweites Zahnrad 35 steht mit einem Zahnrad 51, welches mit einer Schneckenwelle 36 gekoppelt ist, in Wirkungseingriff, wobei die Schneckenwelle 36 Teil des Getriebes 33 ist und im Werkzeugträger 24 positioniert ist. Zwischen dem ersten Zahnrad 34, welches mit der Antriebswelle 32 in Kontakt steht, und dem zweiten Zahnrad 35, welches mit dem Zahnrad 51 der Schneckenwelle 36 in Kontakt steht, ist im Ausführungsbeispiel der Fig. 3 ein weiteres Zahnrad 37 geschaltet. Über die Zahnräder 34, 35, 37 und 51 wird demnach die Drehbewegung der Antriebswelle 32 auf das Schneckengetriebe 36 übertragen, welches mit dem Drehwerkzeughalter 28 in Wirkungseingriff steht und so die Drehbewegung der Antriebswelle 32 in eine Schwenkbewegung des Drehwerkzeughalters 28 umsetzt. Die Zahnräder 34, 35, 37 und 51 sowie die Schneckenwelle 36 sind im Vorsprung 25 der Bohrstange 23 bzw. im Werkzeugträger 24 über entsprechende Lagerwellen 38 gelagert. Der Drehwerkzeughalter 28 ist als Segment eines Schneckenrads ausgebildet.

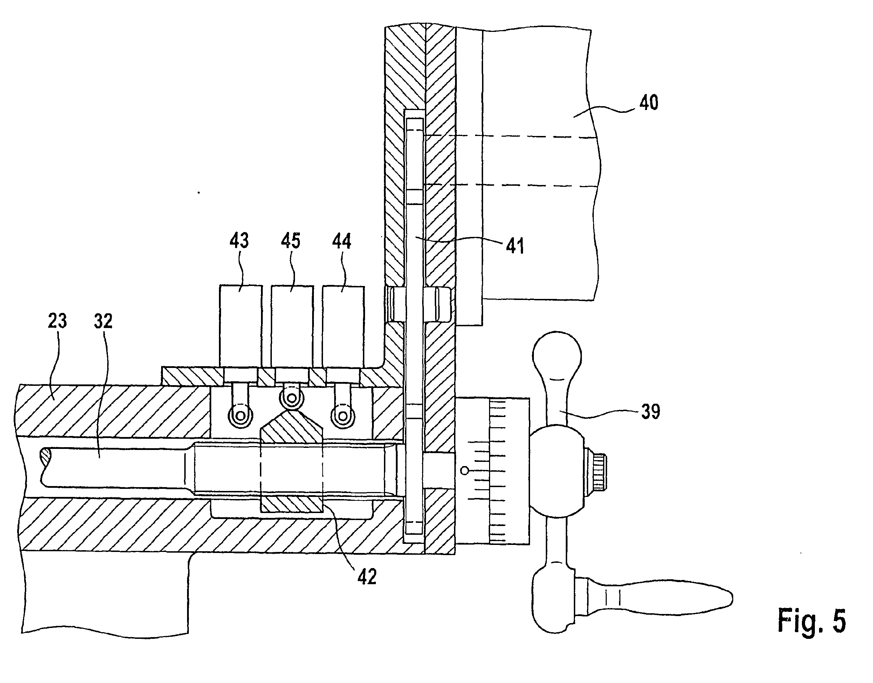

Die Antriebsenergie zum Antrieb der Antriebswelle 32 und damit letztendlich die Antriebsenergie zum Schwenken des Drehwerkzeughalters 28 wird entweder manuell über eine Kurbel 39 oder durch einen elektromotorischen Antrieb 40 bereitgestellt. Die Kurbel 39 sowie der elektromotorische Antrieb 40 sind in Fig. 2 und 5 dargestellt. Die Kurbel 39 wirkt direkt auf die Antriebswelle 32. Zwischen den elektromotorischen Antrieb 40 und die Antriebswelle 32 ist ein Getriebe 41 geschaltet. Wie Fig. 5 entnommen werden kann, wirkt mit der Antriebswelle 32 ein mechanischer Anschlag 42 zusammen, wobei der mechanische Anschlag 42 zusammen mit Endschaltern 43 und 44 die Bewegung des Drehwerkzeughalters 28 und damit des Drehwerkzeugs 27, nämlich die Schwenkbewegung desselben, begrenzt. Zwischen die beiden Endschalter 43 und 44 ist ein Schalter 45 geschaltet, welcher der Positionsanzeige des Drehwerkzeughalters 28 und damit des Drehwerkzeugs 27 dient.

Wie Fig. 3 entnommen werden kann, sind in die Bohrstange 23, in den Fortsatz bzw. den Vorsprung 25 der Bohrstange 23 sowie in den Werkzeugträger 24 Leitungen 46 integriert, um zum Beispiel Kühlmittel und/oder Schmiermittel in Richtung auf das Drehwerkzeug 27 zu führen. Das durch die Leitungen 46 geführte Kühlmittel bzw. Schmiermittel wird über eine Düse 47 auf das Drehwerkzeug 27 gerichtet.

Wie bereits erwähnt, sind die Abmessungen des Werkzeugträgers 24 sowie des Vorsprungs 25 der Bohrstange 23 derart dimensioniert, dass der Werkzeugträger 24 sowie die Bohrstange 23 in demontiertem bzw. in entkoppeltem Zustand in die Nabenbohrung 26 des zu bearbeitenden Rotors 10 einführbar sind. Mithilfe einer in Fig. 2 dargestellten Montageeinrichtung 48 wird zuerst der Werkzeugträger 24 in die Nabenbohrung 26 des zu bearbeitenden Rotors 10 eingeführt und axial an die Position innerhalb der Nabenbohrung 26 bzw. des Rotors 10 verschoben, an welcher eine Drehbearbeitung an radial innenliegenden Flächen des Rotors 10 erfolgen soll. An dieser axialen Position wird der Werkzeugträger 24 mit der Montageeinrichtung 48 radial nach außen zwischen zwei benachbarten Rotorscheiben 12 des Rotors 10, also in die Kammer 19 zwischen zwei benachbarten Rotorscheiben 12 hineingeschoben. Anschließend wird die Bohrstange 23 mit dem Fortsatz bzw. Vorsprung 25 axial in die Nabenbohrung 26 des zu bearbeitenden Rotors 10 eingeschoben, und zwar so weit, bis der Vorsprung 25 mit dem Werkzeugträger 24 fluchtet. In dieser Position werden der Werkzeugträger 24 sowie der Vorsprung 25 des Bohrträgers 23 miteinander verbunden. Dies kann zum Beispiel mithilfe der in Fig. 3 dargestellten Klemmeinrichtung 49 erfolgen. Alternativ können der Werkzeugträger 24 sowie der Vorsprung 25 der Bohrstange 23 auch über eine Schraubverbindung miteinander gekoppelt werden.

Wie insbesondere Fig. 2 entnommen werden kann, ist die erfindungsgemäße Vorrichtung 22 über einen Schnellwechselhalter 50 an einer Bearbeitungsstation, nämlich an einem Werkzeugschlitten einer Drehmaschine, befestigbar. Der Schnellwechselhalter 50 ist dabei integraler Bestandteil der Bohrstange 23.

Mit der erfindungsgemäßen Vorrichtung ist auch dann eine Drehbearbeitung eines Rotors an radial innenliegenden Bearbeitungsflächen des Rotors möglich, wenn eine Nabenbohrung des Rotors gegenüber sich radial außen an die Nabenbohrung anschließenden Kammern, die von zwei benachbarten Rotorscheiben begrenzt sind, eine geringe radiale Erstreckung aufweist. Weiterhin ist die erfindungsgemäße Vorrichtung dann zur Drehbearbeitung der Rotoren geeignet, wenn im Nabenbereich der Rotorscheiben der axiale Abstand zwischen den Rotorscheiben gering ist. Über die Schwenkbewegung des Drehwerkzeugs kann auch dann eine Drehbearbeitung des Rotors erfolgen, wenn der geringe axiale Abstand zwischen zwei Rotorscheiben einen ausreichenden axialen Vorschub der Bohrstange nicht zulässt. Die Schwenkbewegung des Drehwerkzeugs kompensiert den fehlenden axialen Vorschub der Bohrstange.

## Patentansprüche

1. Vorrichtung zur Drehbearbeitung von Rotoren, insbesondere Rotoren von Gasturbinen, an radial nach Innen weisenden Bearbeitungsflächen (16), wobei der jeweilige Rotor (10) mindestens zwei axial eng benachbarte, radial außen über Fortsätze (13) verbundene Rotorscheiben (12) mit axial aufgedickten Nabenbereichen (21) und zentralen Nabenbohrungen (26) aufweist, und wobei die mindestens eine Bearbeitungsfläche (16) zwischen den Rotorscheiben (12) im Bereich der Fortsätze (13) liegt, mit einer sich im wesentlichen in axialer Richtung erstreckenden, drehfest gehaltenen Bohrstange (23) und einem sich im wesentlichen in radialer Richtung erstreckenden, ein Drehwerkzeug (27) tragenden Werkzeugträger (24),
**dadurch gekennzeichnet,**
**dass** die Bohrstange (23) einen sich im wesentlichen in radialer Richtung erstreckenden Vorsprung (25) aufweist, der mit dem sich im wesentlichen in radialer Richtung erstreckenden Werkzeugträger (24) zusammenkoppelbar ist, wobei die radialen Abmessungen des Vorsprungs (25) der Bohrstange (23) und des Werkzeugträgers (24) an die Abmessungen einer Nabenbohrung (26) des zu bearbeitenden Rotors (10) derart angepasst sind, dass die Bohrstange (23) und der Werkzeugträger (24) in entkoppeltem Zustand in die Nabenbohrung (26) einführbar sind, und dass in zusammengekoppeltem Zustand das im Werkzeugträger (24) gelagerte Drehwerkzeug (27) an die radial nach Innen weisende Bearbeitungsfläche (16) des Rotors (10) zur Anlage bringbar ist, dass das Drehwerkzeug (27) im Werkzeugträger (24) über einen Drehwerkzeughalter (28) beweglich gelagert ist, wobei das Drehwerkzeug (27) zusammen mit dem Drehwerkzeughalter (28) gegenüber dem Werkzeugträger (24) in vorwiegend axialer Richtung schwenkbar ist, dass in der Bohrstange (23) eine Antriebswelle (32) geführt ist, und dass die Antriebswelle (32) über ein Getriebe (33) mit dem Drehwerkzeughalter (28) gekoppelt ist, wobei das Getriebe (33) die Antriebsbewegung der Antriebswelle (32) in eine Schwenkbewegung des Drehwerkzeughalters (28) umsetzt.

2. Vorrichtung nach Anspruch 1,
**dadurch gekennzeichnet,**
**dass** das Getriebe (33) von mindestens einem im Vorsprung (25) der Bohrstange (23) verlaufenden Zahnrad (34, 35, 37) und einer im Werkzeugträger (24) verlaufenden Scheckenwelle (36) mit zugeordnetem Zahnrad (51) gebildet ist.

3. Vorrichtung nach Anspruch 2,
**dadurch gekennzeichnet,**
**dass** im Vorsprung (25) der Bohrstange (23) mehrere Zahnräder (34, 35, 37) verlaufen, wobei ein erstes Zahnrad (34) mit der Antriebswelle (32) gekoppelt ist, und wobei ein zweites Zahnrad (35) mit dem der Schneckenwelle (36) zugeordneten Zahnrad (51) gekoppelt ist.

4. Vorrichtung nach Anspruch 2 oder 3,
**dadurch gekennzeichnet,**
**dass** die Schneckenwelle (36) an dem Drehwerkzeughalter (28) angreift, wobei der Drehwerkzeughalter (28) als Segment eines Schneckenrads ausgebildet ist.

5. Vorrichtung nach einem der Ansprüche 1 bis 4,
**dadurch gekennzeichnet,**
**dass** in die Bohrstange (23) und in den Werkzeugträger (24) Leitungen (46) integriert sind, die ein Kühlmittel und/oder ein Schmiermittel in Richtung auf das Drehwerkzeug (27) führen.

## Claims

1. Device for the rotary machining of rotors, in particular rotors of gas turbines, on machining surfaces (16) facing radially inward, wherein the respective rotor (10) comprises at least two rotor discs (12) in close proximity axially, with thick hub regions (21) axially and central hub bores (26), connected radially to an outside via projections (13), and wherein the at least one machining surface (16) lies between the rotor discs (12) in the region of the projections (13), with a drill rod (23) extending essentially in an axial direction, held in a rotationally fixed manner and a tool carrier (24) holding a lathe tool (27) and extending essentially in the radial direction,
**characterised in that**
the drill rod (23) has a projection (25) extending essentially in the radial direction, which can be coupled to the tool carrier (24) extending essentially in the radial direction, wherein the radial dimensions of the projection (25) of the drill rod (23) and of the tool carrier (24) are adapted to the measurements of a hub bore (26) of the rotor (10) to be machined in such a manner that that the drill rod (23) and the tool carrier (24) can be inserted into the hub bore (26) in the uncoupled state, and that, in the coupled state, the lathe tool (27) mounted in the tool carrier (24) can be abutted to the machining surface (16) of the rotor (10) facing radially inward, that the lathe tool (27) is mounted in a movable manner in the tool carrier (24) via a lathe tool holder (28), wherein the lathe tool (27) can be pivoted in a primarily axial direction with the lathe tool holder (28) with regard to the tool carrier (24), that a drive shaft (32) is guided in the drill rod (23), and that the drive shaft (32) is coupled to the lathe tool holder (28) via a gear (33), wherein the gear (33) converts the driving movement of the drive shaft (32) into a pivoting movement of the lathe tool holder (28).

2. Device according to claim 1,
**characterised in that**
the gear (33) is formed by at least one gear wheel (34, 35, 37) extending in the projection (25) of the drill rod (23), and a worm gear (36) with an associated gear wheel (51) extending in the tool carrier (24).

3. Device according to claim 2,
**characterised in that**
several gear wheels (34, 35, 37) run in the projection (25) of the drill rod (23), wherein a first gear wheel (34) is coupled to the drive shaft (32), and wherein a second gear wheel (35) is coupled to the gear wheel (51) associated with the worm gear (36).

4. Device according to claim 2 or 3,
**characterised in that** the worm gear (36) engages the lathe tool holder (28), wherein the lathe tool holder (28) is formed as a segment of a worm gear.

5. Device according to one of claims 1 to 4,
**characterised in that**
lines (46) are integrated in the drill rod (23) and the tool carrier (24), which guide a coolant and/or a lubricant in the direction of the lathe tool (27).

## Revendications

1. Dispositif de tournage de rotors, en particulier de rotors de turbines à gaz, au niveau de surfaces à usiner (16) orientées radialement vers l'intérieur, le rotor respectif (10) présentant au moins deux disques de rotor (12), étroitement adjacents dans le sens axial et reliés radialement à l'extérieur par le biais de prolongements (13), avec des zones de moyeu (21) axialement épaissis et des alésages de moyeu (26) centraux et l'au moins une surface à usiner (16) entre les disques de rotor (12) se trouvant dans la zone des prolongements (13), avec une barre d'alésage (23) s'étendant essentiellement dans le sens axial, maintenue de manière solidaire en rotation et un porte-outil (24) s'étendant essentiellement dans le sens radial et portant un outil de tournage (27), **caractérisé en ce que** la barre d'alésage (23) présente une saillie (25) s'étendant essentiellement dans le sens radial, qui peut être couplée avec le porte-outil (24) s'étendant essentiellement dans le sens radial, les dimensions radiales de la saillie (25) de la barre d'alésage (23) et du porte-outil (24) étant adaptées aux dimensions d'un alésage de moyeu (26) du rotor à usiner (10) de telle sorte que la barre d'alésage (23) et le porte-outil (24) peuvent être introduits à l'état découplé dans l'alésage de moyeu (26) et qu'à l'état couplé, l'outil de tournage (27) logé dans le porte-outil (24) peut être mis en appui contre la surface à usiner (16) du rotor (10) orientée radialement vers l'intérieur, que l'outil de tournage (27) est logé de manière mobile dans le porte-outil (24) par le biais d'un support d'outil de tournage (28), l'outil de tournage (27) pouvant pivoter conjointement avec le support d'outil de tournage (28) principalement dans le sens axial par rapport au porte-outil (24), qu'un arbre d'entraînement (32) est guidé dans la barre d'alésage (23) et que l'arbre d'entraînement (32) est couplé avec le support d'outil de tournage (28) par le biais d'un engrenage (33), l'engrenage (33) convertissant le mouvement d'entraînement de l'arbre d'entraînement (32) en un mouvement de pivotement du support d'outil de tournage (28).

2. Dispositif selon la revendication 1, **caractérisé en ce que** l'engrenage (33) est formé d'au moins une roue dentée (34, 35, 37) s'étendant dans la saillie (25) de la barre d'alésage (23) et d'une vis sans fin (36) s'étendant dans le porte-outil (24) avec une roue dentée (51) associée.

3. Dispositif selon la revendication 2, **caractérisé en ce que** plusieurs roues dentées (34, 35, 37) s'étendent dans la saillie (25) de la barre d'alésage (23), une première roue dentée (34) étant couplée avec l'arbre d'entraînement (32) et une deuxième roue dentée (35) étant couplée avec la roue dentée (51) associée à la vis sans fin (36).

4. Dispositif selon la revendication 2 ou 3, **caractérisé en ce que** la vis sans fin (36) s'applique au niveau du support d'outil de tournage (28), le support d'outil de tournage (28) étant réalisé sous forme de segment d'une roue hélicoïdale.

5. Dispositif selon l'une quelconque des revendications 1 à 4, **caractérisé en ce que** des conduites (46) qui conduisent un réfrigérant et/ou un lubrifiant en direction de l'outil de tournage (27) sont intégrées dans la barre d'alésage (23) et dans le porte-outil (24).
